# EUROPEAN PATENT APPLICATION

(11) **EP 1 780 645 A1**
(43) Date of publication of application: **02.05.2007**
(21) Application number: 05753276.4
(22) Date of filing: 24.06.2005
(51) Int. Cl.: G06F 17/21, G06F 17/24

(54) **DOCUMENT PROCESSING METHOD AND DEVICE**

(30) Priority: 24.06.2004 JP 2004186128
(71) Applicant: JustSystems Corporation, Tokushima-shi, Tokushima 771-0189 (JP)
(72) Inventor: KANO, Toshinobu JustSystems Corporation, Tokushima-shi okushima 771-0189 (JP); AOKI, Jumpei c/o JustSystems Corporation, Tokushima-shi okushima 771-0189 (JP)
(74) Representative: Palmer, Jonathan R.
(86) International application number: PCT/JP2005/011668
(87) International publication number: WO 2006/001393

(57) **Abstract**

The present invention allows the user to insert data into a document described in a markup language in a simple manner.

A data acquisition unit 308 receives an instruction to select a part of a processing target document. A property acquisition unit 314 receives information with respect to the tag structure included in the document. A tag creating unit 330 creates at least one tag, which is to be added to the part of the processing target document thus selected by the data acquisition unit 308, based upon the tag structure information received by the property acquisition unit 314. The tag adding unit 332 creates several duplicates of the selected part of the processing target document according to the number of tag combinations created by the tag creating unit 330. Furthermore, the tag adding unit 332 adds each of the multiple kinds of tag combinations to the respective duplicate of the selected part of the document thus created. Memory 334 stores the multiple versions of the selected part of the document output from the tag adding unit 332.

## Description

### Technical Field

The present invention relates to a document processing technique, and particularly to a document processing method and a document processing apparatus for processing a document described in a markup language.

### Background Art

The XML format has been attracting attention as a format that allows the user to share data with other users via a network. This promotes the development of applications for creating, displaying, and editing XML documents (see Patent document 1, for example). The XML documents are created based upon a vocabulary (tag set) defined according to a document format definition.
[Patent Document 1]
Japanese Patent Application Laid-open No. 2001-290804

### Disclosure of Invention

### [Problems to be Solved by the Invention]

An arrangement for inputting data such as a character string or the like into an XML document preferably allows the user to input the data in a simple manner giving consideration to the ease-of-use for the user. The present invention has been made in view of the aforementioned problems. Accordingly, it is an object thereof to provide a document processing method and a document processing apparatus which allow the user to insert data into a document described in a markup language with the improved ease-of-use for the user.

### [Means for Solving the Problems]

In order to solve the aforementioned problems, a document processing apparatus according to an aspect of the present invention comprises: a selection unit for selecting a part of a document described in a markup language; a reception unit for receiving the properties of the markup language used for describing the document; a creating unit for creating at least one tag in the markup language, which is to be added to the part of the document thus selected by the selection unit, based upon the properties received by the reception unit; and an output unit for creating several duplicates of the selected part of the document according to the number of tags thus created by the creating unit, adding at least one tag thus created to each duplicate of the selected part of the document thus reproduced, and outputting each version of the selected part of the document with added tags to memory.

The "markup language" may be a kind of XML, e.g., XHTML, SVG, MathML, etc. Also, examples of the markup languages include SGML, HTML, etc. The term "properties of the markup language" as used here represents an item for identifying the markup language used for describing a document. Examples of the properties of the markup language include the kind of markup language, and the rules of the elements included in the markup language.

According to this aspect, at least one tag is created and added to a selected part of a document described in a markup language. Such an arrangement allows a part of a document to be output in the form of the data described in the markup language without the need for the user to describe new tags.

The property of the markup language used for describing the document thus received by the reception unit may be a tag structure. Furthermore, the creating unit may create at least one tag in the markup language, which is to be added to the part of the document thus selected by the selection unit, such that adding the tag maintains the integrity of the tag structure included in the document. Also, the document which is to be a target for the selection made by the selection unit may have a hierarchical structure. Furthermore, the creating unit may extract tags in the layer in which the selected part of the document has been disposed, and tags in upper layers above the tags, from the hierarchical structure of the document. Furthermore, the creating unit may employ the tags thus extracted as the tags to be added to the part of the document thus selected by the selection unit. With such an arrangement, the tags are created giving consideration to the tag structure included in the document, thereby maintaining the integrity of the tag structure included in the document.

The document processing apparatus may further comprising an insertion unit having a function of selecting one from among at least one version of the selected part of the document which has been output from the output unit, and which includes a added tag set, and a function of inserting the selected one version of the selected part of the document into a document described in a markup language. Such an arrangement allows a selected part of a document to be inserted at various positions in the document.

Another aspect of the present invention relates to a document processing method. The document processing method comprises: selection of a part of a document described in a markup language; creation of at least one tag in the markup language, which is to be added to the part of the document thus selected, based upon the properties of the markup language used for describing the document; creation of several duplicates of the selected part of the document according to the number of tags thus created; addition of at least one tag thus created to each duplicate of the selected part of the document thus created; and output of the several versions of the selected part of the document with the added tags to memory.

Note that any combination of the aforementioned components or any manifestation of the present invention realized by replacement of a method, a device, a system, and so forth, is effective as an embodiment of the present invention.

### [Advantages]

The present invention provides a function of inserting data into a document described in a markup language with the improved ease-of-use for the user.

### Brief Description of the Drawings

FIG. 1 is a diagram which shows a configuration of a document processing apparatus according to the background technique.
FIG. 2 is a diagram which shows an example of an XML document which is to be edited by the document processing apparatus.
FIG. 3 is a diagram which shows an example in which the XML document shown in FIG. 2 is mapped to a table described in HTML.
FIG. 4(a) is a diagram which shows an example of a definition file used for mapping the XML document shown in FIG. 2 to the table shown in FIG. 3.
FIG. 4(b) is a diagram which shows an example of a definition file used for mapping the XML document shown in FIG. 2 to the table shown in FIG. 3.
FIG. 5 is a diagram which shows an example of a screen on which the XML document shown in FIG. 2 is displayed after having been mapped to HTML according to the correspondence shown in FIG. 3.
FIG. 6 is a diagram which shows an example of a graphical user interface provided by a definition file creating unit, which allows the user to create a definition file.
FIG. 7 is a diagram which shows another example of a screen layout created by the definition file creating unit.
FIG. 8 is a diagram which shows an example of an editing screen for an XML document, as provided by the document processing apparatus.
FIG. 9 is a diagram which shows another example of an XML document which is to be edited by the document processing apparatus.
FIG. 10 is a diagram which shows an example of a screen on which the document shown in FIG. 9 is displayed.
FIG. 11 is a diagram which shows the configuration of a data insertion device according to an embodiment 1.
FIG. 12(a) through FIG. 12(c) are diagrams which show an example of data which is to be inserted by the data insertion device shown in FIG. 11.
FIG. 13 is a flowchart which shows the procedure of data insertion processing performed by the data insertion device shown in FIG. 11.
FIG. 14 is a flowchart which shows another example of the procedure of the data insertion processing performed by the data insertion device shown in FIG. 11.
FIG. 15(a) through FIG. 15(d) are diagrams which show an example of data to be inserted by the data insertion device shown in FIG. 11.
FIG. 16 is a flowchart which shows another example of the procedure of the data insertion processing performed by the data insertion device shown in FIG. 11.
FIG. 17 is a diagram which shows another example of the configuration of the data insertion device according to the embodiment 1.
FIG. 18(a) through FIG. 18(d) are diagrams which show an example of data to be inserted by the data insertion device shown in FIG. 17.
FIG. 19(a) through FIG. 19(e) are diagrams which show another example of data to be inserted by the data insertion device shown in FIG. 17.
FIG. 20 is a diagram which shows the configuration of a data insertion device according to an embodiment 2.
FIG. 21 is a flowchart which shows the procedure for data acquisition executed by the data insertion device shown in FIG. 20.
FIG. 22(a) through FIG. 22(d) are diagrams which show an example of data to be inserted by the data insertion device shown in FIG. 20.

### Reference Numerals

- 20: document processing apparatus
- 22: main control unit
- 24: editing unit
- 30: DOM unit
- 32: DOM provider
- 34: DOM builder
- 36: output unit
- 40: CSS unit
- 42: CSS parser
- 44: CSS provider
- 46: rendering unit
- 50: HTML unit
- 52, 62: control unit
- 54, 64: edit unit
- 56, 66: display unit
- 60: SVG unit
- 72: document acquisition unit
- 74: namespace URI acquisition unit
- 76: definition file name creating unit
- 80: VC unit
- 82: mapping unit
- 84: definition file acquisition unit
- 86: definition file generator
- 300: data insertion device
- 302: user interface unit
- 304: processing unit
- 306: dictionary storage unit
- 308: data acquisition unit
- 310: translation candidate acquisition unit
- 312: translation unit
- 314: property acquisition unit
- 316: insertion unit
- 320: position determination unit
- 322: vocabulary acquisition unit

### Best Mode for Carrying Out the Invention

Description will be made below regarding the background technique for the present invention before detailed description of the present embodiment.

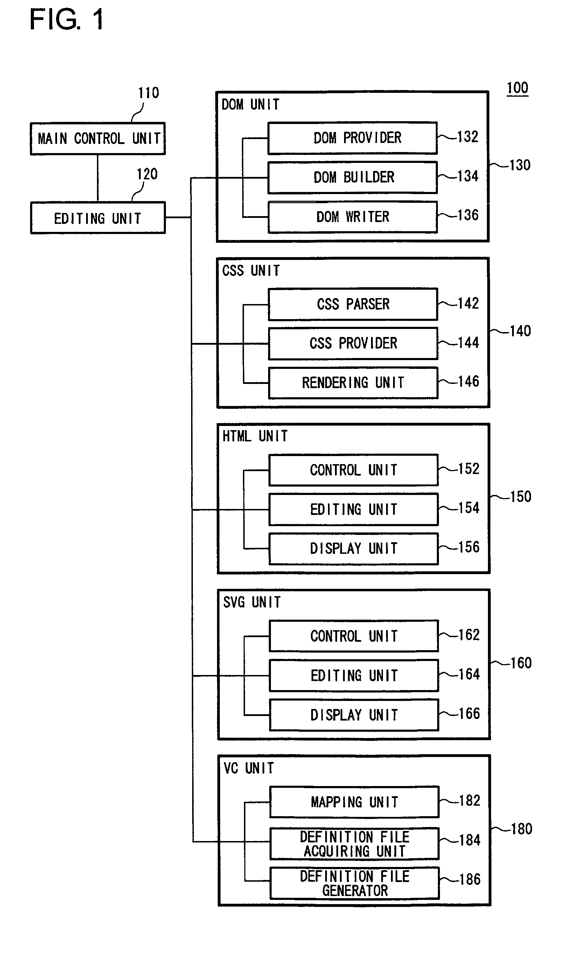

FIG. 1 illustrates a structure of a document processing apparatus 20 according to the background technique. The document processing apparatus 20 processes a structured document where data in the document are classified into a plurality of components having a hierarchical structure. Represented in the background technique is an example in which an XML document, as one type of a structured document, is processed. The document processing apparatus 20 is comprised of a main control unit 22, an editing unit 24, a DOM unit 30, a CSS unit 40, an HTML unit 50, an SVG unit 60 and a VC unit 80 which serves as an example of a conversion unit. In terms of hardware components, these unit structures may be realized by any conventional processing system or equipment, including a CPU or memory of any computer, a memory-loaded program, or the like. Here, the drawing shows a functional block configuration which is realized by cooperation between the hardware components and software components. Thus, it would be understood by those skilled in the art that these function blocks can be realized in a variety of forms by hardware only, software only or the combination thereof.

The main control unit 22 provides for the loading of a plug-in or a framework for executing a command. The editing unit 24 provides a framework for editing XML documents. Display and editing functions for a document in the document processing apparatus 20 are realized by plug-ins, and the necessary plug-ins are loaded by the main control unit 22 or the editing unit 24 according to the type of document under consideration. The main control unit 22 or the editing unit 24 determines which vocabulary or vocabularies describes the content of an XML document to be processed, by referring to a name space of the document to be processed, and loads a plug-in for display or editing corresponding to the thus determined vocabulary so as to execute the display or the editing. For instance, an HTML unit 50, which displays and edits HTML documents, and an SVG unit 60, which displays and edits SVG documents, are implemented in the document processing apparatus 20. That is, a display system and an editing system are implemented as plug-ins for each vocabulary (tag set), so that when an HTML document and an SVG document are edited, the HTML unit 50 and the SVG unit 60 are loaded, respectively. As will be described later, when compound documents, which contain both the HTML and SVG components, are to be processed, both the HTML unit 50 and the SVG unit 60 are loaded.

By implementing the above structure, a user can select so as to install only necessary functions, and can add or delete a function or functions at a later stage, as appropriate. Thus, the storage area of a recording medium, such as a hard disk, can be effectively utilized, and the wasteful use of memory can be prevented at the time of executing programs. Furthermore, since the capability of this structure is highly expandable, a developer can deal with new vocabularies in the form of plug-ins, and thus the development process can be readily facilitated. As a result, the user can also add a function or functions easily at low cost by adding a plug-in or plug-ins.

The editing unit 24 receives an event, which is an editing instruction, from the user via the user interface. Upon reception of such an event, the editing unit 24 notifies a suitable plug-in or the like of this event, and controls the processing such as redoing this event, canceling (undoing) this event, etc.

The DOM unit 30 includes a DOM provider 32, a DOM builder 34 and a DOM writer 36. The DOM unit 30 realizes functions in compliance with a document object model (DOM), which is defined to provide an access method used for handling data in the form of an XML document. The DOM provider 32 is an implementation of a DOM that satisfies an interface defined by the editing unit 24. The DOM builder 34 generates DOM trees from XML documents. As will be described later, when an XML document to be processed is mapped to another vocabulary by the VC unit 80, a source tree, which corresponds to the XML document in a mapping source, and a destination tree, which corresponds to the XML document in a mapping destination, are generated. At the end of editing, for example, the DOM writer 36 outputs a DOM tree as an XML document.

The CSS unit 40, which provides a display function conforming to CSS, includes a CSS parser 42, a CSS provider 44 and a rendering unit 46. The CSS parser 42 has a parsing function for analyzing the CSS syntax. The CSS provider 44 is an implementation of a CSS object and performs CSS cascade processing on the DOM tree. The rendering unit 46 is a CSS rendering engine and is used to display documents, described in a vocabulary such as HTML, which are laid out using CSS.

The HTML unit 50 displays or edits documents described in HTML. The SVG unit 60 displays or edits documents described in SVG. These display/editing systems are realized in the form of plug-ins, and each system is comprised of a display unit (also designated herein as a "canvas") 56 and 66, which displays documents, a control unit (also designated herein as an "editlet") 52 and 62, which transmits and receives events containing editing commands, and an edit unit (also designated herein as a "zone") 54 and 64, which edits the DOM according to the editing commands. Upon the control unit 52 or 62 receiving a DOM tree editing command from an external source, the edit unit 54 or 64 modifies the DOM tree and the display unit 56 or 66 updates the display. These units have a structure similar to the framework of the so-called MVC (Model-View-Controller). With such a structure, in general, the display units 56 and 66 correspond to "View". On the other hand, the control units 52 and 62 correspond to "Controller", and the edit units 54 and 64 and DOM instance corresponds to "Model". The document processing apparatus 20 according to the background technique allows an XML document to be edited according to each given vocabulary, as well as providing a function of editing the HTML document in the form of tree display. The HTML unit 50 provides a user interface for editing an HTML document in a manner similar to a word processor, for example. On the other hand, the SVG unit 60 provides a user interface for editing an SVG document in a manner similar to an image drawing tool.

The VC unit 80 includes a mapping unit 82, a definition file acquiring unit 84 and a definition file generator 86. The VC unit 80 performs mapping of a document, which has been described in a particular vocabulary, to another given vocabulary, thereby providing a framework that allows a document to be displayed and edited by a display/editing plug-in corresponding to the vocabulary to which the document is mapped. In the background technique, this function is called a vocabulary connection (VC). In the VC unit 80, the definition file acquiring unit 84 acquires a script file in which the mapping definition is described. Here, the definition file specifies the correspondence (connection) between the nodes for each node. Furthermore, the definition file may specify whether or not editing of the element values or attribute values is permitted. Furthermore, the definition file may include operation expressions using the element values or attribute values for the node. Detailed description will be made later regarding these functions. The mapping unit 82 instructs the DOM builder 34 to generate a destination tree with reference to the script file acquired by the definition file acquiring unit 84. This manages the correspondence between the source tree and the destination tree. The definition file generator 86 offers a graphical user interface which allows the user to generate a definition file.

The VC unit 80 monitors the connection between the source tree and the destination tree. Upon reception of an editing instruction from the user via a user interface provided by a plug-in that handles a display function, the VC unit 80 first modifies a relevant node of the source tree. As a result, the DOM unit 30 issues a mutation event indicating that the source tree has been modified. Upon reception of the mutation event thus issued, the VC unit 80 modifies a node of the destination tree corresponding to the modified node, thereby updating the destination tree in a manner that synchronizes with the modification of the source tree. Upon reception of a mutation event that indicates that the destination tree has been modified, a plug-in having functions of displaying/editing the destination tree, e.g., the HTML unit 50, updates a display with reference to the destination tree thus modified. Such a structure allows a document described in any vocabulary, even a minor vocabulary used in a minor user segment, to be converted into a document described in another major vocabulary. This enables such a document described in a minor vocabulary to be displayed, and provides an editing environment for such a document.

An operation in which the document processing apparatus 20 displays and/or edits documents will be described herein below. When the document processing apparatus 20 loads a document to be processed, the DOM builder 34 generates a DOM tree from the XML document. The main control unit 22 or the editing unit 24 determines which vocabulary describes the XML document by referring to a name space of the XML document to be processed. If the plug-in corresponding to the vocabulary is installed in the document processing apparatus 20, the plug-in is loaded so as to display/edit the document. If, on the other hand, the plug-in is not installed in the document processing apparatus 20, a check shall be made to see whether a mapping definition file exists or not. And if the definition file exits, the definition file acquiring unit 84 acquires the definition file and generates a destination tree according to the definition, so that the document is displayed/edited by the plug-in corresponding to the vocabulary which is to be used for mapping. If the document is a compound document containing a plurality of vocabularies, relevant portions of the document are displayed/edited by plug-ins corresponding to the respective vocabularies, as will be described later. If the definition file does not exist, a source or tree structure of a document is displayed and the editing is carried out on the display screen.

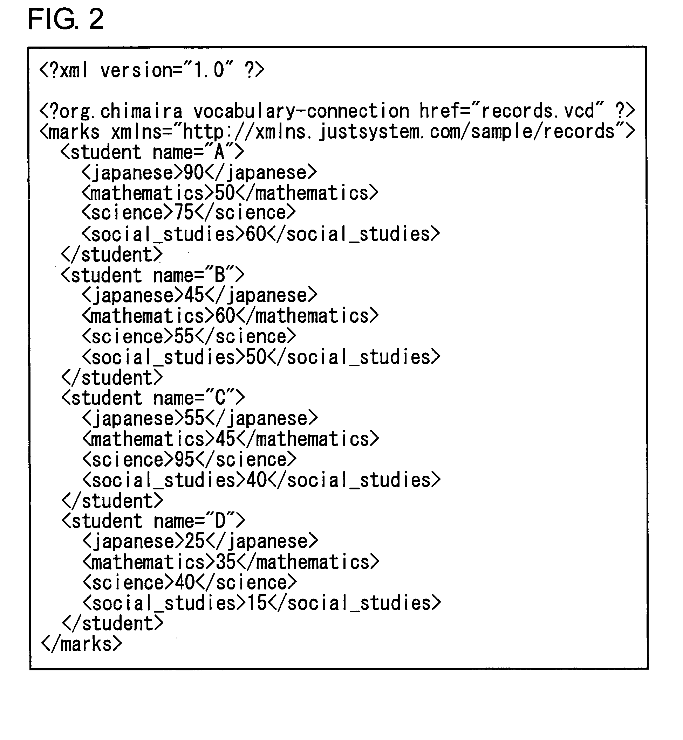

FIG. 2 shows an example of an XML document to be processed. According to this exemplary illustration, the XML document is used to manage data concerning grades or marks that students have earned. A component "marks", which is the top node of the XML document, includes a plurality of components "student" provided for each student under "marks". The component "student" has an attribute "name" and contains, as child elements, the subjects "japanese", "mathematics", "science", and "social_studies". The attribute "name" stores the name of a student. The components "japanese", "mathematics", "science" and "social_studies" store the test scores for the subjects Japanese, mathematics, science, and social studies, respectively. For example, the marks of a student whose name is "A" are "90" for Japanese, "50" for mathematics, "75" for science and "60" for social studies. Hereinafter, the vocabulary (tag set) used in this document will be called "marks managing vocabulary".

Here, the document processing apparatus 20 according to the background technique does not have a plug-in which conforms to or handles the display/editing of marks managing vocabularies. Accordingly, before displaying such a document in a manner other than the source display manner or the tree display manner, the above-described VC function is used. That is, there is a need to prepare a definition file for mapping the document, which has been described in the marks managing vocabulary, to another vocabulary, which is supported by a corresponding plug-in, e.g., HTML or SVG. Note that description will be made later regarding a user interface that allows the user to create the user's own definition file. Now, description will be made below regarding a case in which a definition file has already been prepared.

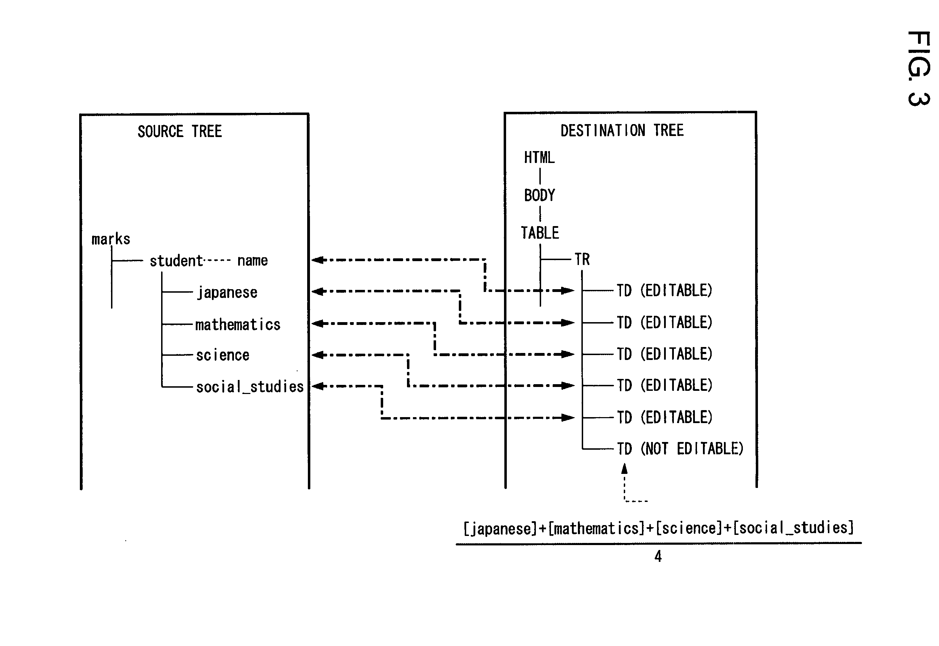

FIG. 3 shows an example in which the XML document shown in FIG. 2 is mapped to a table described in HTML. In an example shown in FIG. 3, a "student" node in the marks managing vocabulary is associated with a row ("TR" node) of a table ("TABLE" node) in HTML. The first column in each row corresponds to an attribute value "name", the second column to a "japanese" node element value, the third column to a "mathematics" node element value, the fourth column to a "science" node element value and the fifth column to a "social_studies" node element value. As a result, the XML document shown in FIG. 2 can be displayed in an HTML tabular format. Furthermore, these attribute values and element values are designated as being editable, so that the user can edit these values on a display screen using an editing function of the HTML unit 50. In the sixth column, an operation expression is designated for calculating a weighted average of the marks for Japanese, mathematics, science and social studies, and average values of the marks for each student are displayed. In this manner, more flexible display can be effected by making it possible to specify the operation expression in the definition file, thus improving the users' convenience at the time of editing. In this example shown in FIG. 3, editing is designated as not being possible in the sixth column, so that the average value alone cannot be edited individually. Thus, in the mapping definition it is possible to specify editing or no editing so as to protect the users against the possibility of performing erroneous operations.

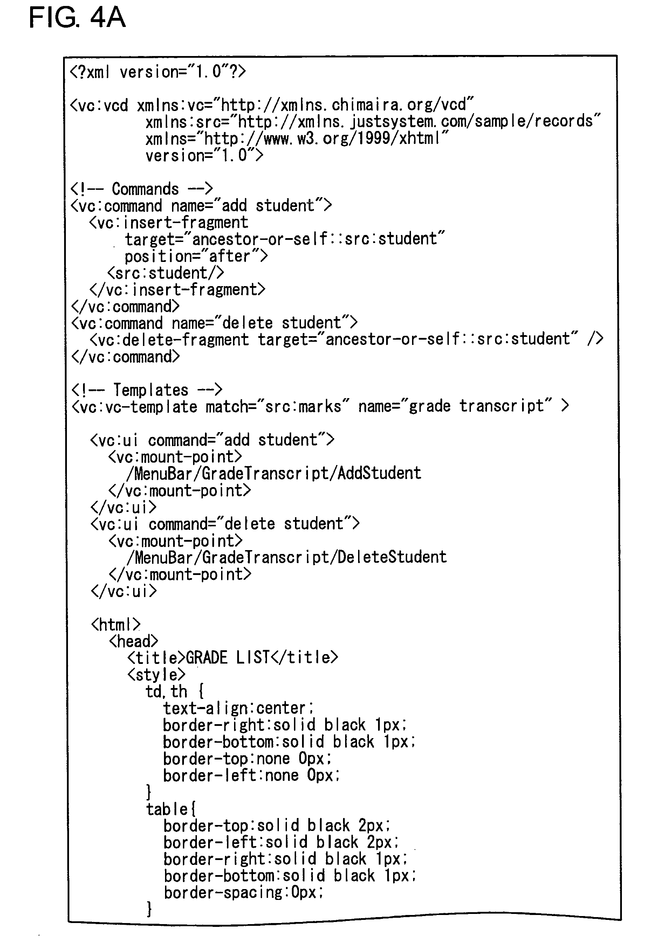

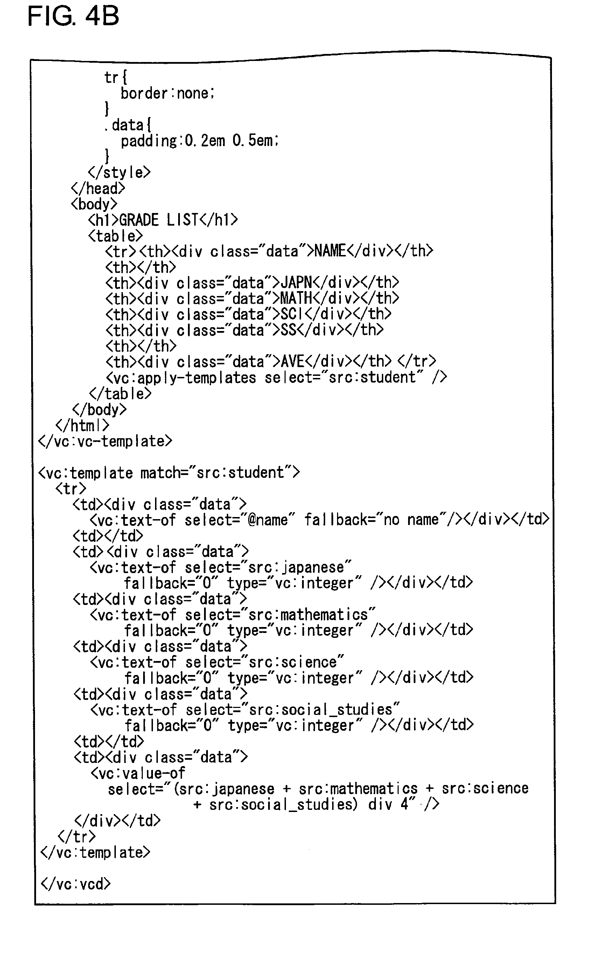

FIG. 4 (a) and FIG. 4 (b) illustrate an example of a definition file to map the XML document shown in FIG. 2 to the table shown in FIG. 3. This definition file is described in script language defined for use with definition files. In the definition file, definitions of commands and templates for display are described. In the example shown in FIG. 4(a) and FIG. 4(b), "add student" and "delete student" are defined as commands, and an operation of inserting a node "student" into a source tree and an operation of deleting the node "student" from the source tree, respectively, are associated with these commands. Furthermore, the definition file is described in the form of a template, which describes that a header, such as "name" and "japanese", is displayed in the first row of a table and the contents of the node "student" are displayed in the second and subsequent rows. In the template displaying the contents of the node "student", a term containing "text-of" indicates that editing is permitted, whereas a term containing "value-of" indicates that editing is not permitted. Among the rows where the contents of the node "student" are displayed, an operation expression "(src:japanese + src:mathematics + scr:science + scr:social_studies) div 4" is described in the sixth row. This means that the average of the student's marks is displayed.

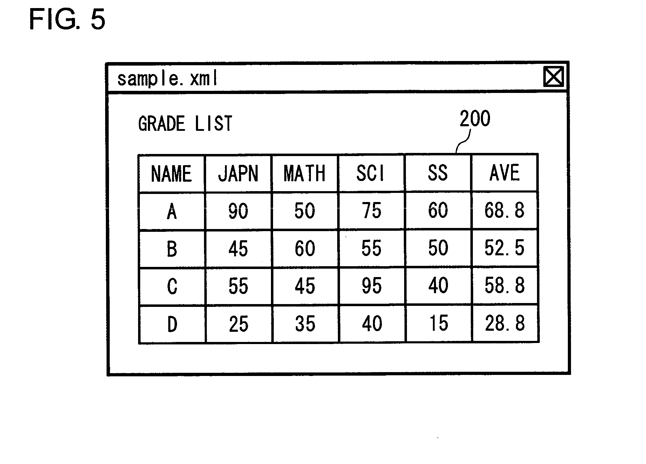

FIG. 5 shows an example of a display screen on which an XML document described in the marks managing vocabulary shown in FIG. 2 is displayed by mapping the XML document to HTML using the correspondence shown in Fig. 3. Displayed from left to right in each row of a table 90 are the name of each student, marks for Japanese, marks for mathematics, marks for science, marks for social studies and the averages thereof. The user can edit the XML document on this screen. For example, when the value in the second row and the third column is changed to "70", the element value in the source tree corresponding to this node, that is, the marks of student "B" for mathematics are changed to "70". At this time, in order to have the destination tree follow the source tree, the VC unit 80 changes a relevant portion of the destination tree accordingly, so that the HTML unit 50 updates the display based on the destination tree thus changed. Hence, the marks of student "B" for mathematics are changed to "70", and the average is changed to "55" in the table on the screen.

On the screen as shown in FIG. 5, commands like "add student" and "delete student" are displayed in a menu as defined in the definition file shown in FIG. 4(a) and FIG. 4(b). When the user selects a command from among these commands, a node "student" is added or deleted in the source tree. In this manner, with the document processing apparatus 20 according to the background technique, it is possible not only to edit the element values of components in a lower end of a hierarchical structure but also to edit the hierarchical structure. An edit function for editing such a tree structure may be presented to the user in the form of commands. Furthermore, a command to add or delete rows of a table may, for example, be linked to an operation of adding or deleting the node "student". A command to embed other vocabularies therein may be presented to the user. This table may be used as an input template, so that marks data for new students can be added in a fill-in-the-blank format. As described above, the VC function allows a document described in the marks managing vocabulary to be edited using the display/editing function of the HTML unit 50.

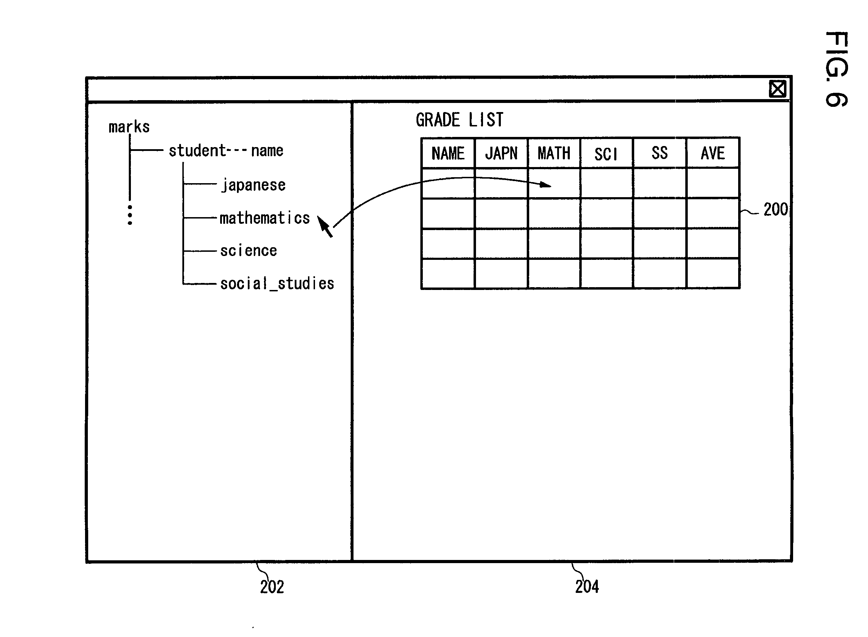

FIG. 6 shows an example of a graphical user interface, which the definition file generator 86 presents to the user, in order for the user to generate a definition file. An XML document to be mapped is displayed in a tree in a left-hand area 91 of a screen. The screen layout of an XML document after mapping is displayed in a right-hand area 92 of the screen. This screen layout can be edited by the HTML unit 50, and the user creates a screen layout for displaying documents in the right-hand area 92 of the screen. For example, a node of the XML document which is to be mapped, which is displayed in the left-hand area 91 of the screen, is dragged and dropped into the HTML screen layout in the right-hand area 92 of the screen using a pointing device such as a mouse, so that a connection between a node at a mapping source and a node at a mapping destination is specified. For example, when "mathematics," which is a child element of the element "student," is dropped to the intersection of the first row and the third column in a table 90 on the HTML screen, a connection is established between the "mathematics" node and a "TD" node in the third column. Either editing or no editing can be specified for each node. Moreover, the operation expression can be embedded in a display screen. When the screen editing is completed, the definition file generator 86 generates definition files, which describe connections between the screen layout and nodes.

Viewers or editors which can handle major vocabularies such as XHTML, MathML and SVG have already been developed. However, it does not serve any practical purpose to develop dedicated viewers or editors for such documents described in the original vocabularies as shown in FIG. 2. If, however, the definition files for mapping to other vocabularies are created as mentioned above, the documents described in the original vocabularies can be displayed and/or edited utilizing the VC function without the need to develop a new viewer or editor.

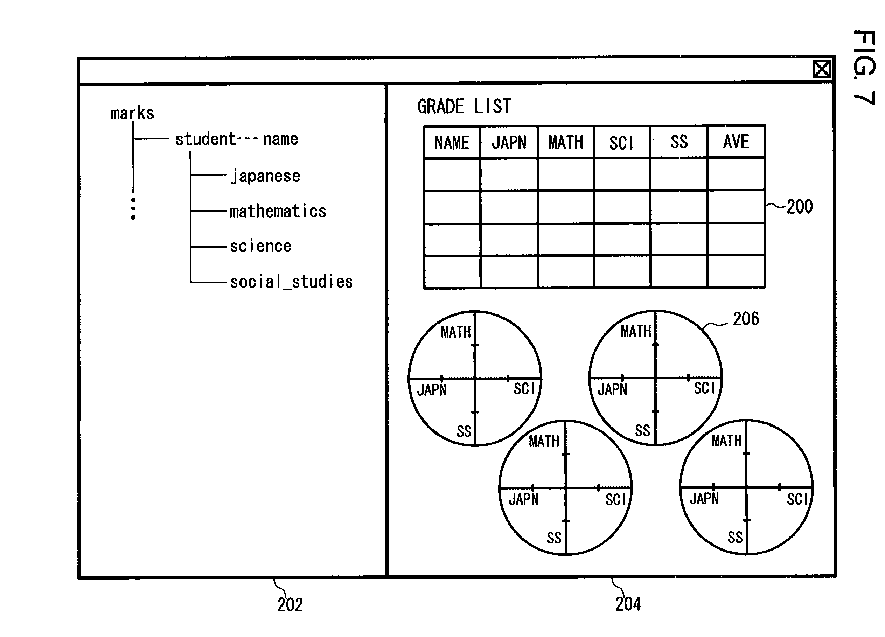

FIG. 7 shows another example of a screen layout generated by the definition file generator 86. In the example shown in FIG. 7, a table 90 and circular graphs 93 are created on a screen for displaying XML documents described in the marks managing vocabulary. The circular graphs 93 are described in SVG. As will be discussed later, the document processing apparatus 20 according to the background technique can process a compound document described in the form of a single XML document according to a plurality of vocabularies. That is why the table 90 described in HTML and the circular graphs 93 described in SVG can be displayed on the same screen.

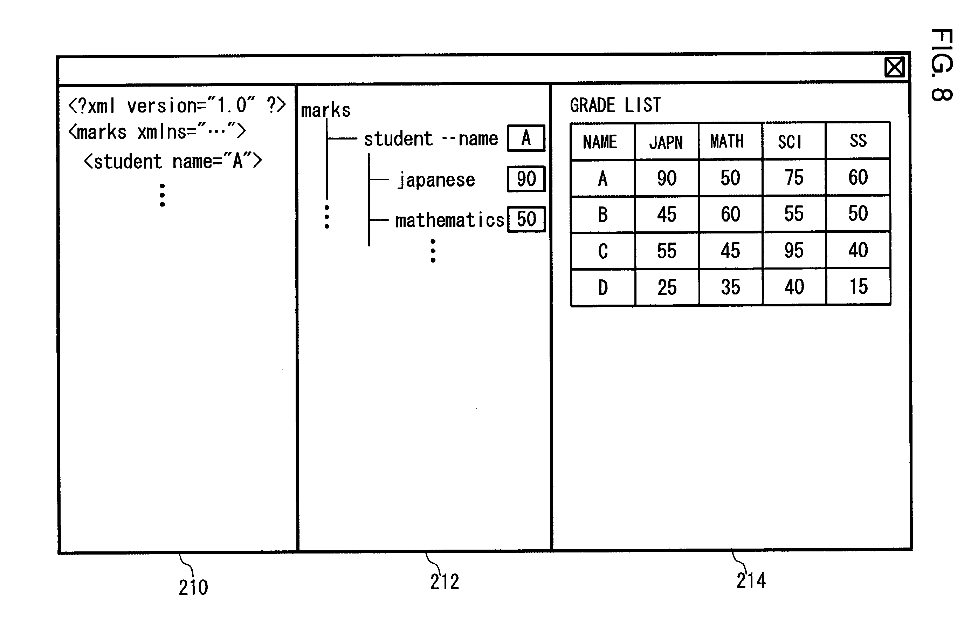

FIG. 8 shows an example of a display medium, which in a preferred but non-limiting embodiment is an edit screen, for XML documents processed by the document processing apparatus 20. In the example shown in FIG. 8, a single screen is partitioned into a plurality of areas and the XML document to be processed is displayed in a plurality of different display formats at the respective areas. The source of the document is displayed in an area 94, the tree structure of the document is displayed in an area 95, and the table shown in FIG. 5 and described in HTML is displayed in an area 96. The document can be edited in any of these areas, and when the user edits content in any of these areas, the source tree will be modified accordingly, and then each plug-in that handles the corresponding screen display updates the screen so as to effect the modification of the source tree. Specifically, display units of the plug-ins in charge of displaying the respective edit screens are registered in advance as listeners for mutation events that provide notice of a change in the source tree. When the source tree is modified by any of the plug-ins or the VC unit 80, all the display units, which are displaying the edit screen, receive the issued mutation event(s) and then update the screens. At this time, if the plug-in is executing the display through the VC function, the VC unit 80 modifies the destination tree following the modification of the source tree. Thereafter, the display unit of the plug-in modifies the screen by referring to the destination tree thus modified.

For example, when the source display and tree-view display are implemented by dedicated plug-ins, the source-display plug-in and the tree-display plug-in execute their respective displays by directly referring to the source tree without involving the destination tree. In this case, when the editing is done in any area of the screen, the source-display plug-in and the tree-display plug-in update the screen by referring to the modified source tree. Also, the HTML unit 50 in charge of displaying the area 96 updates the screen by referring to the destination tree, which has been modified following the modification of the source tree.

The source display and the tree-view display can also be realized by utilizing the VC function. That is to say, an arrangement may be made in which the source and the tree structure are laid out in HTML, an XML document is mapped to the HTML structure thus laid out, and the HTML unit 50 displays the XML document thus mapped. In such an arrangement, three destination trees in the source format, the tree format and the table format are generated. If the editing is carried out in any of the three areas on the screen, the VC unit 80 modifies the source tree and, thereafter, modifies the three destination trees in the source format, the tree format and the table format. Then, the HTML unit 50 updates the three areas of the screen by referring to the three destination trees.

In this manner, a document is displayed on a single screen in a plurality of display formats, thus improving a user's convenience. For example, the user can display and edit a document in a visually easy-to-understand format using the table 90 or the like while understanding the hierarchical structure of the document by the source display or the tree display. In the above example, a single screen is partitioned into a plurality of display formats, and they are displayed simultaneously. Also, a single display format may be displayed on a single screen so that the display format can be switched according to the user's instructions. In this case, the main control unit 22 receives from the user a request for switching the display format and then instructs the respective plug-ins to switch the display.

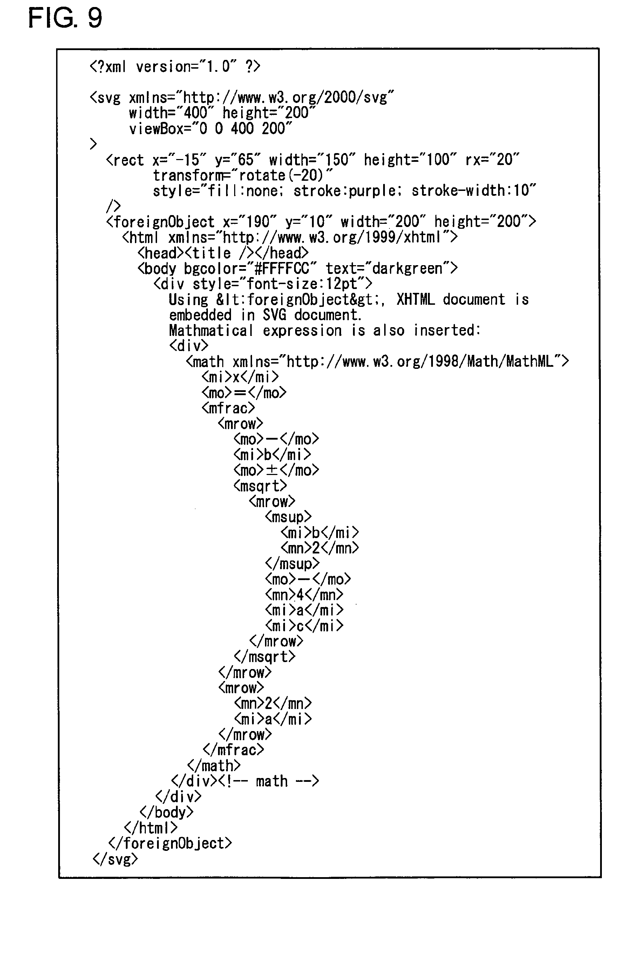

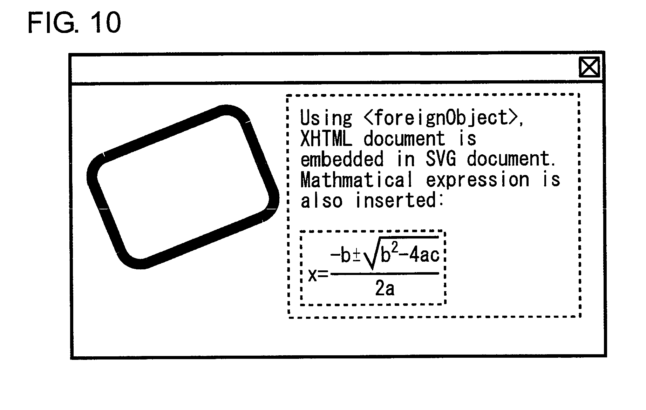

FIG. 9 illustrates another example of an XML document edited by the document processing apparatus 20. In the XML document shown in FIG. 9, an XHTML document is embedded in a "foreignObject" tag of an SVG document, and the XHTML document contains an equation described in MathML. In this case, the editing unit 24 assigns the rendering job to an appropriate display system by referring to the name space. In the example illustrated in FIG. 9, first, the editing unit 24 instructs the SVG unit 60 to render a rectangle, and then instructs the HTML unit 50 to render the XHTML document. Furthermore, the editing unit 24 instructs a MathML unit (not shown) to render an equation. In this manner, the compound document containing a plurality of vocabularies is appropriately displayed. FIG. 10 illustrates the resulting display.

The displayed menu may be switched corresponding to the position of the cursor (carriage) during the editing of a document. That is, when the cursor lies in an area where an SVG document is displayed, the menu provided by the SVG unit 60, or a command set which is defined in the definition file for mapping the SVG document, is displayed. On the other hand, when the cursor lies in an area where the XHTML document is displayed, the menu provided by the HTML unit 50, or a command set which is defined in the definition file for mapping the HTML document, is displayed. Thus, an appropriate user interface can be presented according to the editing position.

In a case that there is neither a plug-in nor a mapping definition file suitable for any one of the vocabularies according to which the compound document has been described, a portion described in this vocabulary may be displayed in source or in tree format. In the conventional practice, when a compound document is to be opened where another document is embedded in a particular document, their contents cannot be displayed without the installation of an application to display the embedded document. According to the background technique, however, the XML documents, which are composed of text data, may be displayed in source or in tree format so that the contents of the documents can be ascertained. This is a characteristic of the text-based XML documents or the like.

Another advantageous aspect of the data being described in a text-based language, for example, is that, in a single compound document, a part of the compound document described in a given vocabulary can be used as reference data for another part of the same compound document described in a different vocabulary. Furthermore, when a search is made within the document, a string of characters embedded in a drawing, such as SVG, may also be search candidates.

In a document described in a particular vocabulary, tags belonging to other vocabularies may be used. Though such an XML document is generally not valid, it can be processed as a valid XML document as long as it is well-formed. In such a case, the tags thus inserted that belong to other vocabularies may be mapped using a definition file. For instance, tags such as "Important" and "Most Important" may be used so as to display a portion surrounding these tags in an emphasized manner, or may be sorted out in the order of importance.

When the user edits a document on an edit screen as shown in FIG. 10, a plug-in or a VC unit 80, which is in charge of processing the edited portion, modifies the source tree. A listener for mutation events can be registered for each node in the source tree. Normally, a display unit of the plug-in or the VC unit 80 conforming to a vocabulary that belongs to each node is registered as the listener. When the source tree is modified, the DOM provider 32 traces toward a higher hierarchy from the modified node. If there is a registered listener, the DOM provider 32 issues a mutation event to the listener. For example, referring to the document shown in FIG. 9, if a node which lies lower than the <html> node is modified, the mutation event is notified to the HTML unit 50, which is registered as a listener to the <html> node. At the same time, the mutation event is also notified to the SVG unit 60, which is registered as a listener in an <svg> node, which lies upper to the <html> node. At this time, the HTML unit 50 updates the display by referring to the modified source tree. Since the nodes belonging to the vocabulary of the SVG unit 60 itself are not modified, the SVG unit 60 may disregard the mutation event.

Depending on the contents of the editing, modification of the display by the HTML unit 50 may change the overall layout. In such a case, the layout is updated by a screen layout management mechanism, e.g., the plug-in that handles the display of the highest node, in increments of display regions which are displayed according to the respective plug-ins. For example, in a case of expanding a display region managed by the HTML unit 50, first, the HTML unit 50 renders a part managed by the HTML unit 50 itself, and determines the size of the display region. Then, the size of the display area is notified to the component that manages the screen layout so as to request the updating of the layout. Upon receipt of this notice, the component that manages the screen layout rebuilds the layout of the display area for each plug-in. Accordingly, the display of the edited portion is appropriately updated and the overall screen layout is updated.

### (Embodiment 1)

The embodiment 1 of the present invention relates to a data insertion device providing: a function of translating a document described in XML and languages other than XHTML (which will be referred to as the "processing target document" hereafter) into a document described in XHTML (which will be referred to as the "XHTML document" hereafter); a function of displaying the document thus translated on a screen; a function of receiving data such as character strings, symbols, etc., which are to be inserted into the XHTML document, from the user; and a function of inserting the data thus received into the processing target document. The data insertion device according to the present embodiment provides an input function, copy-and-paste function, etc., which allows character strings with XML tags and character strings having an XML hierarchical structure (which will be referred to as "fragments" hereafter) to be inserted into the processing target document, as well as allowing character strings in simple text format to be inserted into the said processing target document, while maintaining the integrity of the hierarchical structure of the processing target document. The data insertion device stores the rules of the vocabulary used for creating the processing target document (which will be referred to as the "processing target vocabulary" hereafter) and the rules of the elements included in the processing target document. Specifically, the data insertion device stores the schema (which will be referred to as the "processing target schema" hereafter). With such an arrangement, the data insertion device translates the data which is to be inserted, based upon the processing target vocabulary at the position where the data is to be inserted and the processing target schema. Then, the data insertion device inserts the data thus translated into the processing target document.

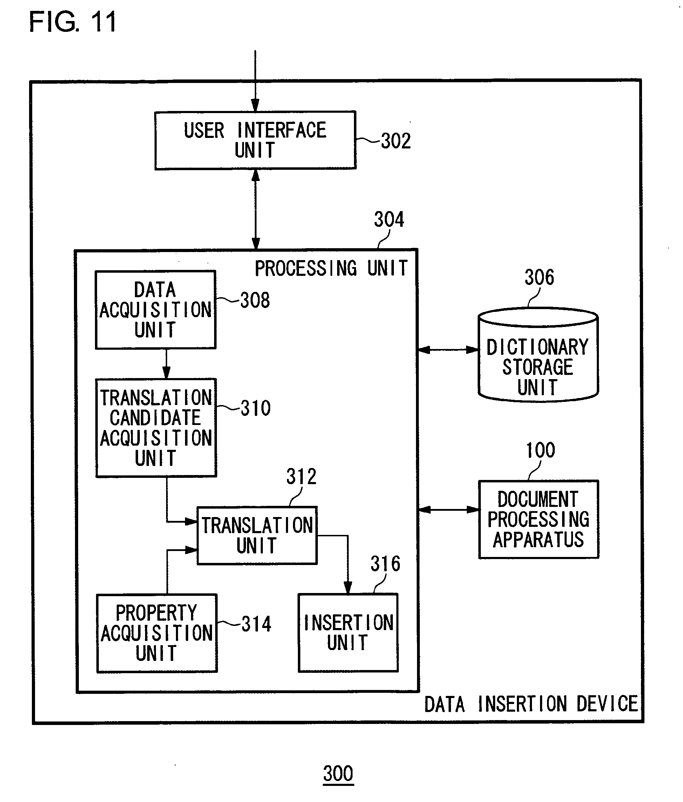

FIG. 11 shows a configuration of a data insertion device 300 according to the embodiment 1. The data insertion device 300 comprises a user interface unit 302, a processing unit 304, a dictionary storage unit 306, and a document processing apparatus 100. Furthermore, the processing unit 304 comprises a data acquisition unit 308, a translation candidate acquisition unit 310, a translation unit 312, a property acquisition unit 314, and an insertion unit 316. Here, the data insertion device 300 is an example of a document processing apparatus which is encompassed by the technical scope of the claims appended to the present specification. On the other hand, the document processing apparatus 100 corresponds to the document processing apparatus 100 described above in the background technique.

The user interface unit 302 receives instructions from the user. With such an arrangement, an unshown screen displays a translated processing target document in the form of an XHTML document. (The meaning of the basic term "document" as used here includes the XHTML document and the processing target document. Also, the term "document" is also used in this specification to refer to a document in the general sense without further qualification.) The user interface unit 302 allows the user to input predetermined instructions with respect to the document thus displayed. Examples of the predetermined instructions include: an instruction to input data such as character strings, symbols, etc., to the document; an instruction to perform an operation to copy a character string at a given position in the document and to paste the character string at another position in the document. Note that the predetermined instructions may include a cut-and-paste instruction or a drag-and-drop instruction, instead of the copy-and-paste instruction. That is to say, the predetermined instructions may include an instruction for performing any processing for the document.

The data acquisition unit 308 receives data which is to be inserted into the document, via the user interface unit 302. Examples of the data which is to be inserted include character strings input as described above, and character strings pasted by the copy-and-paste function.

The dictionary storage unit 306 stores a dictionary beforehand for translating the data input via the data acquisition unit 308. The dictionary storage unit 306 stores dictionaries for handling MathML, SVG, etc., as well as a dictionary used for translating a string of characters in the Japanese hiragana syllabary into a string of characters in Japanese kanji ideograms or the like (which will be referred to as the "general dictionary" hereafter). The translation candidate acquisition unit 310 translates the data received via the data acquisition unit 308 based upon the dictionaries stored in the dictionary storage unit 306. For example, let us consider a case in which the data received via the data acquisition unit 308 is the phrase "root 2" in the hiragana syllabary and a numeral. In this case, the translation candidate acquisition unit 310 translates this character string into "root 2" in the katakana syllabary and a numeral in a text format using the general dictionary. Furthermore, the translation candidate acquisition unit 310 translates this character string into "root 2" with added MathML tags using the MathML dictionary. Specifically, the translation candidate acquisition unit 310 translates this character string into <msqrt><mrow>2</mrow></msqrt>. On the other hand, let us consider a case in which the data received via the data acquisition unit 308 is the word "circle" in the hiragana syllabary. In this case, the translation candidate acquisition unit 310 translates this character string into "circle" in kanji ideograms. Furthermore, the translation candidate acquisition unit 310 translates this character string into a "circle" in an SVG format using the SVG dictionary. Moreover, the translation candidate acquisition unit 310 displays on the screen the data sets which have been obtained as a result of the translation using the multiple dictionaries.

The property acquisition unit 314 receives the properties of the markup language that describe the position in the processing target document where the data is to be inserted. Examples of such properties include the processing target vocabularies and the processing target schema. In a case that the processing target document is described in a single processing target vocabulary, the property acquisition unit 314 acquires the processing target vocabulary as it is. On the other hand, in a case that the processing target document is described in multiple processing target vocabularies, the property acquisition unit 314 acquires the processing target vocabulary at the position where the data is to be inserted. Note that, in order to acquire the processing target vocabulary, a namespace declaration included in the processing target document is used. Also, in order to acquire the processing target schema, a specification attached to the processing target document is used, for example.

The translation unit 312 receives an instruction from the user to select one of the multiple kinds of data sets displayed on the screen by the translation candidate acquisition unit 310. Furthermore, the translation unit 312 determines whether or not the data thus selected by the user can be inserted into the processing target document based upon the processing target vocabulary and the processing target schema received by the property acquisition unit 314. In a case that the insertion can be made, the translation unit 312 determines the insertion. That is to say, the translation candidate acquisition unit 310 and the translation unit 312 translate the data received by the data acquisition unit 308. For example, let us consider a case in which the processing target vocabulary received by the property acquisition unit 314 matches MathML. In this case, in the event that the user has selected "root 2" with the added MathML tags, the translation unit 312 employs "root 2" with the added MathML tags in order to conform to MathML. Also, "root 2" in text format may be employed.

On the other hand, let us consider a case in which the processing target schema received by the property acquisition unit 314 does not permit insertion of MathML <msqrt> tags. In this case, the translation unit 312 employs "root 2" in text format. Furthermore, the translation unit 312 attaches tags to the selected data corresponding to the processing target document. Specific description will be made later regarding an example of the tags to be attached. On the other hand, let us consider a case in which the data thus selected by the user cannot be employed according to the processing target vocabulary and the processing target schema received by the property acquisition unit 314. For example, let us consider a case in which the processing target vocabulary is MathML, but the user has selected a "circle" in SVG format. In this case, the translation unit 312 may perform no processing. In this case, the data insertion device 300 notifies the user to that effect via the screen.

Note that an arrangement may be made in which instead of the translation candidate acquisition unit 310, the translation unit 312 determines the order of precedence of the multiple kinds of data sets translated by the translation candidate acquisition unit 310 based upon the processing target vocabularies and the processing target schema received by the property acquisition unit 314, and displays the multiple kinds of data sets thus translated via an unshown screen according to the order of precedence thus determined. For example, an arrangement may be made as follows. That is to say, at first, the translation unit 312 displays the data set that conforms to the processing target vocabularies or the processing target schema. Next, the translation unit 312 displays the data set that is compatible with the processing target vocabularies or the processing target schema. Lastly, the translation unit 312 displays the data set that is incompatible with both the processing target vocabularies and the processing target schema.

The insertion unit 316 inserts the data selected via the translation unit 312 into an unshown processing target document. Note that, while the processing unit 304 requires predetermined functions provided by the document processing apparatus 100 for executing the above-described processing, description thereof will be omitted. For example, the processing unit 304 requires the functions of the CSS unit 140, the HTML unit 150, and the SVG unit 160 included in the document processing apparatus 100.

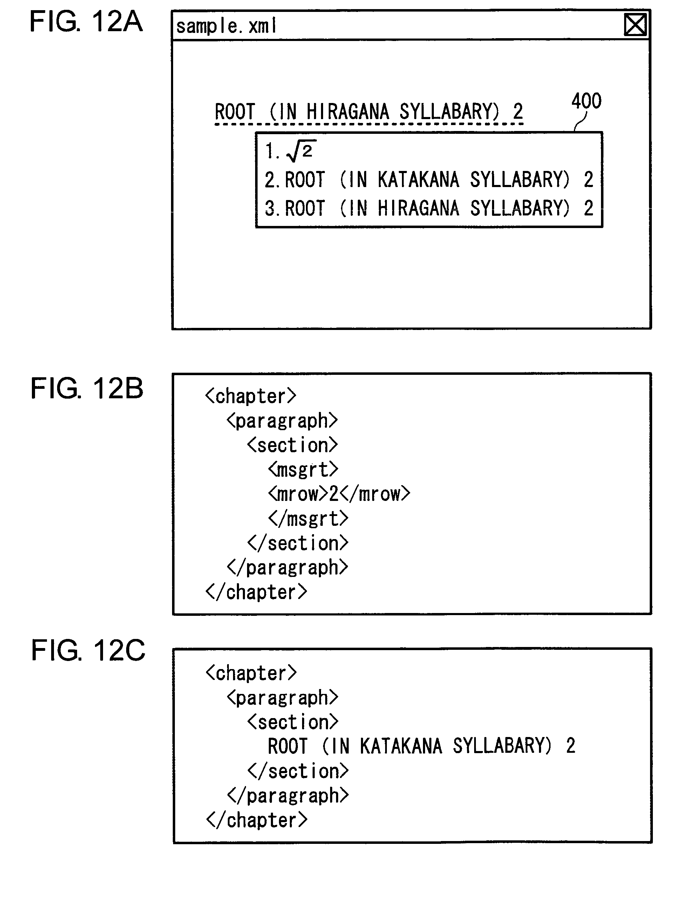

FIG. 12(a) through FIG. 12(c) show examples of the data sets to be inserted by the data insertion device 300. FIG. 12(a) shows a screen which allows the user to input character strings. In FIG. 12(a), the processing target document is displayed on a screen in an XHTML format after having been translated into an XHTML document. In this example, the user has input "root 2" using a string of characters in the hiragana syllabary and a numeral in a text format. Upon the user making an instruction to translate the character string via a predetermined interface, the data insertion device 300 displays "root 2" with added MathML tags as the candidate "1", "root 2" as a string of characters in the katakana syllabary and a numeral in a text format as the candidate "2", and "root 2" as a string of characters in the hiragana syllabary and a numeral in a text format as the candidate "3", on a translation candidate window 400.

FIG. 12(b) shows character strings to be inserted into the processing target document in a case that the user has selected the candidate "1", i.e., "root 2" with the MathML tags, from among the translation candidates displayed on the translation candidate window 400. Note that the drawing shows a part of the XML document. Here, the "root 2" with the MathML tags corresponds to the portion enclosed in <msqrt> and </msqrt>. On the other hand, the <chapter>, <paragraph>, and <section> tags added so as to enclose this portion are tags that have been attached by the aforementioned translation unit 312, and conform to the processing target document. That is to say, with such an arrangement, insertion processing is performed on the assumption that the tag sets <chapter>, <paragraph>, and <section> have been provided to each insertion portion beforehand. Furthermore, the translation unit 312 adds these tags while maintaining the integrity of the hierarchical structure of the processing target document. Moreover, in a case that the processing target schema has been defined, these tags are added so that they conform to the processing target schema. FIG. 12(c) shows character strings to be inserted into the processing target document in a case that the user has selected the candidate "2", i.e., "root 2" as a string of characters in the katakana syllabary and a numeral in a text format from among the translation candidates displayed on the translation candidate window 400 shown in FIG. 12(a). In this example, tags are added to the text "root 2" in the katakana syllabary and a numeral in a manner that conforms to the processing target vocabulary and the processing target schema.

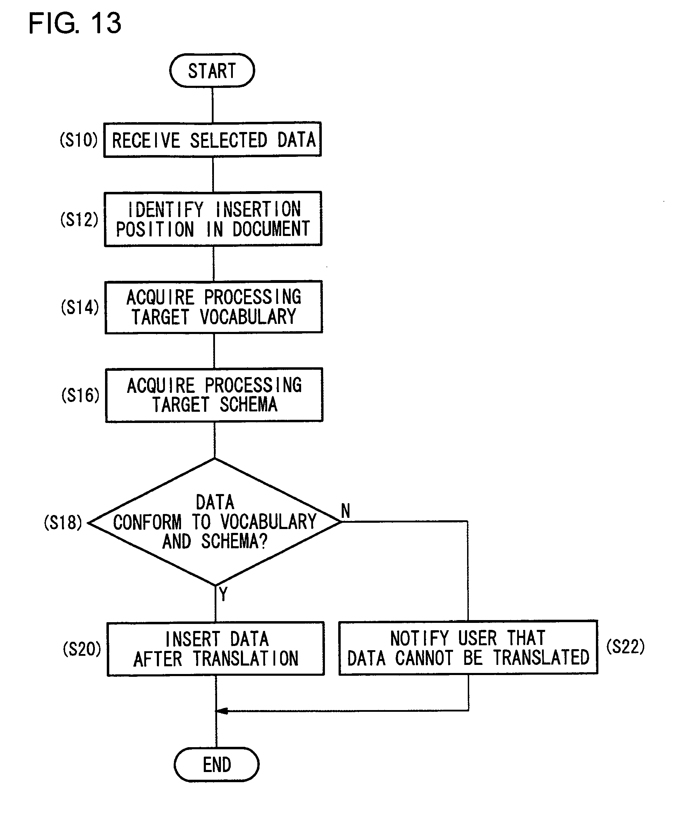

FIG. 13 is a flowchart which shows a data insertion processing procedure performed by the data insertion device 300. The translation unit 312 receives the data selected by the user from among the data translation candidates obtained by the data acquisition unit 308 (S10). The property acquisition unit 314 identifies the insertion position in the processing target document at which the data thus received is to be inserted (S12). Also, the property acquisition unit 314 acquires the processing target vocabulary (S14). Furthermore, the property acquisition unit 314 acquires the processing target schema (S16). The translation unit 312 checks whether or not the data is compatible with the processing target vocabulary and the processing target schema. In a case that the data is compatible with the processing target vocabulary and the processing target schema (in a case of "YES" in S18), the insertion unit 316 inserts the data into the processing target document after the translation of the data (S20). On the other hand, in a case that the data is incompatible with the processing target vocabulary and the processing target schema (in a case of "NO" in S18), the data insertion device 300 notifies the user via the screen to the effect that the data cannot be translated (S22). In this case, the insertion unit 316 may automatically insert the data into the processing target document after translating it into an appropriate format, such as a text format, that allows the data to be inserted into the processing target document.

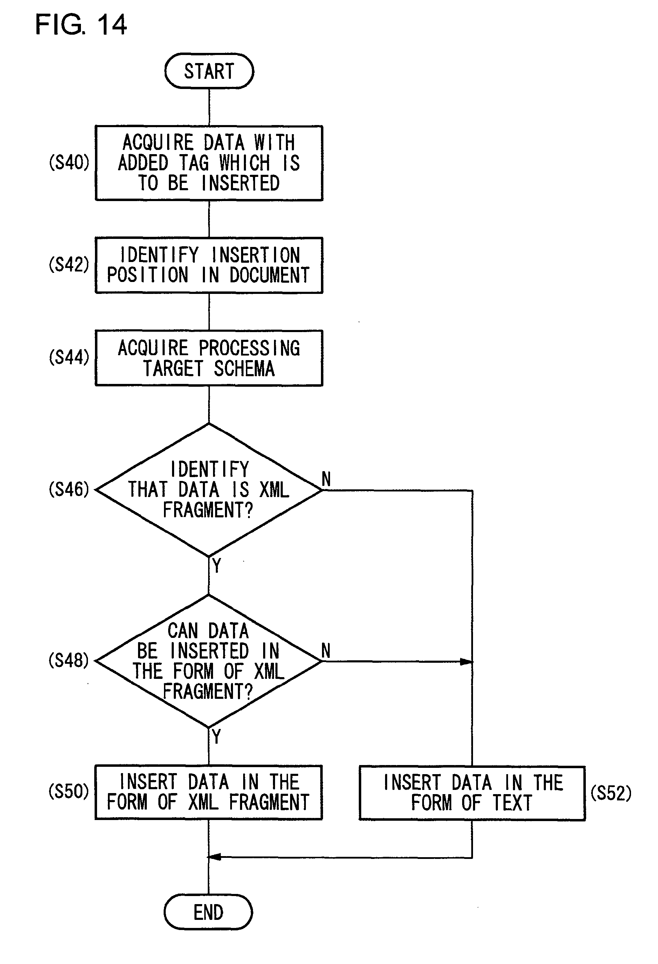

FIG. 14 is a flowchart which shows another example of a data insertion processing procedure performed by the data insertion device 300. A general description will be made regarding this processing prior to description of the flowchart. While this processing is performed by the same type of data insertion device 300 as that shown in FIG. 11, a part of the processing differs from that described above. Note that description will be made below regarding the copy-and-paste processing. The data received by the data acquisition unit 308 includes added tags predetermined beforehand. The translation unit 312 changes the tags added to the data based upon the tags thus added and the processing target schema received by the property acquisition unit 314. In a case that determination has been made that the data matches XML data (i.e., that it is an XML fragment) based upon the tags added to the data received by the data acquisition unit 308, the translation unit 312 attempts to insert the data in the form of an XML fragment. On the other hand, in a case that the data cannot be inserted into the processing target document in the form of an XML fragment due to the properties of the markup language including the processing target schema, the translation unit 312 inserts the data into the document in the form of text data after removing the tags. Also, the translation unit 312 may provide a supplemental namespace as necessary. For example, in some cases, there is difference in the namespace to which the fragment belongs between the portion into which the data is to be inserted and the portions before and after the portion into which the data is to be inserted. In this case, the translation unit 312 may describe the namespace in the tag added to the fragment. For example, the added <section xmlns: = namespace URI> and </section> tag set may be inserted, instead of the <section> and </section> tag set.

The data acquisition unit 308 receives the data which includes the added tags, and which is to be inserted into the document (S40). The property acquisition unit 314 identifies the insertion position in the processing target document at which the data is to be inserted (S42). Furthermore, the property acquisition unit 314 acquires the processing target schema (S44). In a case that the translation unit 312 has identified that the data is an XML fragment (in a case of "YES" in S46), and in a case that the insertion unit 316 can insert the data into the document in the form of an XML fragment (in a case of "YES" in S48), the insertion unit 316 inserts the data into the document in the form of an XML fragment (S50). On the other hand, in a case that the translation unit 312 has identified that the data is not an XML fragment (in a case of "NO" in S46), or in a case that the insertion unit 316 cannot insert the data into the document in the form of an XML fragment (in a case of "NO" in S48), the insertion unit 316 inserts the data into the document in the form of text (S52).

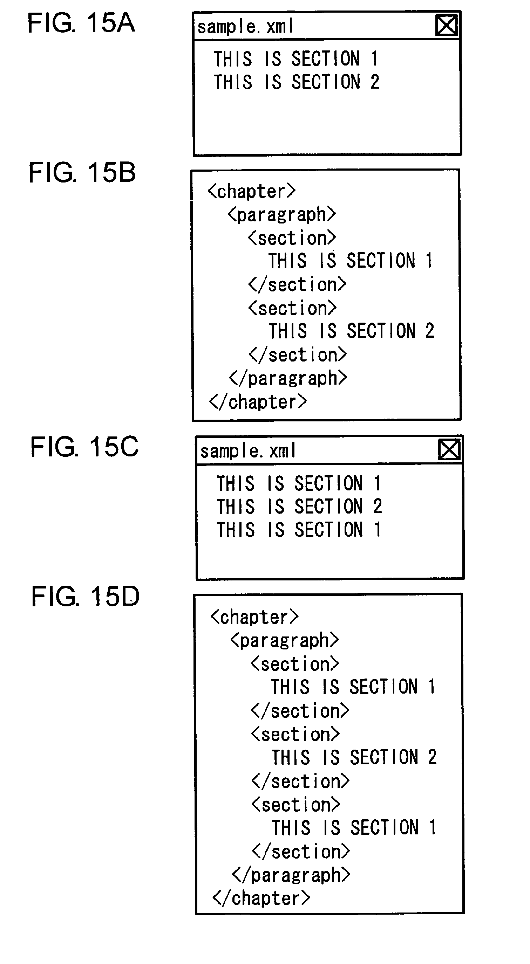

FIG. 15(a) through FIG. 15(d) show examples of data sets inserted by the data insertion device 300. These drawings show examples of what is displayed on the screen and examples of source code that corresponds to the processing described with reference to FIG. 14. FIG. 15(a) shows a screen on which the processing target document is displayed in the form of an XHTML document. As shown in the drawing, the phrase "This is Section 1" is entered in the first row. Also, the phrase "This is Section 2" is entered in the second row. On the other hand, FIG. 15(b) shows the source code described in XML, which corresponds to the screen shown in FIG. 15(a). The drawing shows a part of the XML document. As shown in the drawing, the aforementioned character string is described between the <section> and </section> tag set. FIG. 15(c) shows a screen after the phrase "This is Section 1" entered in the first row shown in FIG. 15(a) has been copied and pasted into the third row. FIG. 15(d) shows the source code described in XML, which corresponds to the screen shown in FIG. 15(c). In a case that the user has selected the phrase "This is Section 1" as the target of the copy processing, the <section> and </section> tag set is added so as to enclose this phrase, and the phrase together with the tag set is input to the data acquisition unit 308. In this case, the translation unit 312 identifies this fragment as an XML fragment based upon the tag information. Accordingly, the fragment is inserted into the processing target document without translation. Note that the translation unit 312 may insert the fragment into the processing target document after a predetermined tag set is added, e.g., the <paragraph> and </paragraph> tag set.

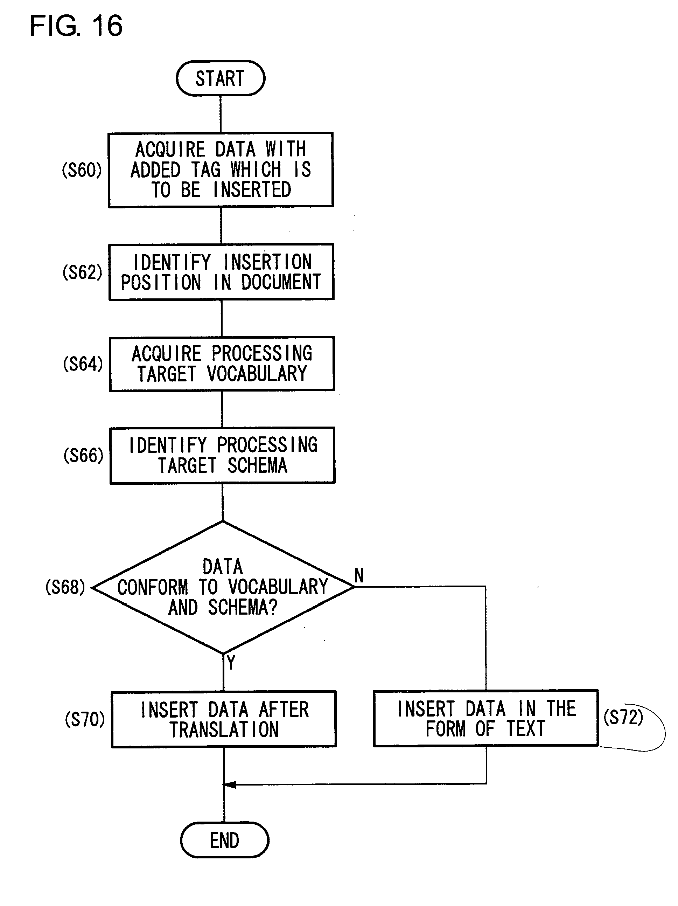

FIG. 16 is a flowchart which shows another example of the data insertion processing procedure executed by the data insertion device 300. A general description will be made regarding this processing prior to description of the flowchart. In the processing shown in FIG. 14, the processing target vocabulary is identified based upon the tags added to the data received by the data acquisition unit 308 and the processing target schema acquired by the property acquisition unit 314. On the other hand, in the processing shown in FIG. 16, the processing target schema is identified based upon the tags added to the data received by the data acquisition unit 308 and the processing target vocabulary acquired by the property acquisition unit 314. Furthermore, the translation unit 312 modifies the tags added to the data so that they conform to the processing target schema thus identified.

The data acquisition unit 308 receives data which includes added tags and which is to be inserted into a document (S60). The property acquisition unit 314 identifies the insertion position in the processing target document at which the data is to be inserted (S62). Furthermore, the property acquisition unit 314 acquires the processing target vocabulary (S64). The translation unit 312 acquires the processing target schema based upon the tags added to the data and the processing target vocabulary (S66). In a case that the data conforms to the processing target schema (in a case of "YES" in S68), the insertion unit 316 inserts the data into the processing target document after the data translation performed by the translation unit 312 (S70). On the other hand, in a case that the data does not conform to the processing target vocabulary or the processing target schema (in a case of "NO" in S68), the insertion unit 316 inserts the data into the processing target document in the form of text (S72).

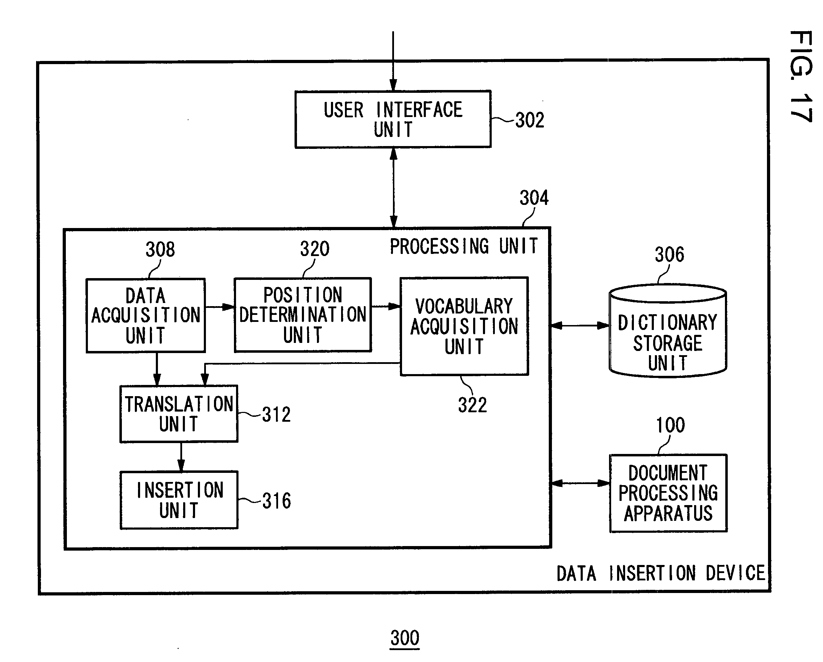

FIG. 17 shows another example of the configuration of the data insertion device 300 according to the embodiment 1. Prior to description of the data insertion device 300 with reference to FIG. 17, a general description will be made below regarding the processing executed by the data insertion device 300. With such an arrangement, the processing target vocabulary is identified using a script file which specifies the mapping definition (which will be referred to as the "VCD" hereafter) and which has been acquired by a definition file acquisition unit 184. On the other hand, the user specifies a character string to be inserted and the insertion position via an XHTML document displayed on a screen. The data insertion device 300 identifies the position at which the character string is to be inserted, based upon the VCD. Furthermore, the data insertion device 300 acquires the processing target vocabulary for the position thus identified. In comparison with the data insertion device 300 shown in FIG. 11, the data insertion device 300 shown in FIG. 17 further includes a position determination unit 320 and a vocabulary acquisition unit 322.

The position determination unit 320 receives a VCD from the VC unit 180 shown in FIG. 1. Also, the position determination unit 320 acquires the insertion position in the XHTML document received by the data acquisition unit 308 at which the character string is to be inserted. Furthermore, the position determination unit 320 identifies the insertion position in the processing target document which corresponds to the insertion position in the XHTML document, using the mapping definition which represents the correspondence between the processing target document and the XHTML document, and which is specified in the VCD. The vocabulary acquisition unit 322 identifies the processing target vocabulary at the position in the processing target document at which the data is to be inserted. The following processing is the same as that shown in FIG. 11, and accordingly, description thereof will be omitted.

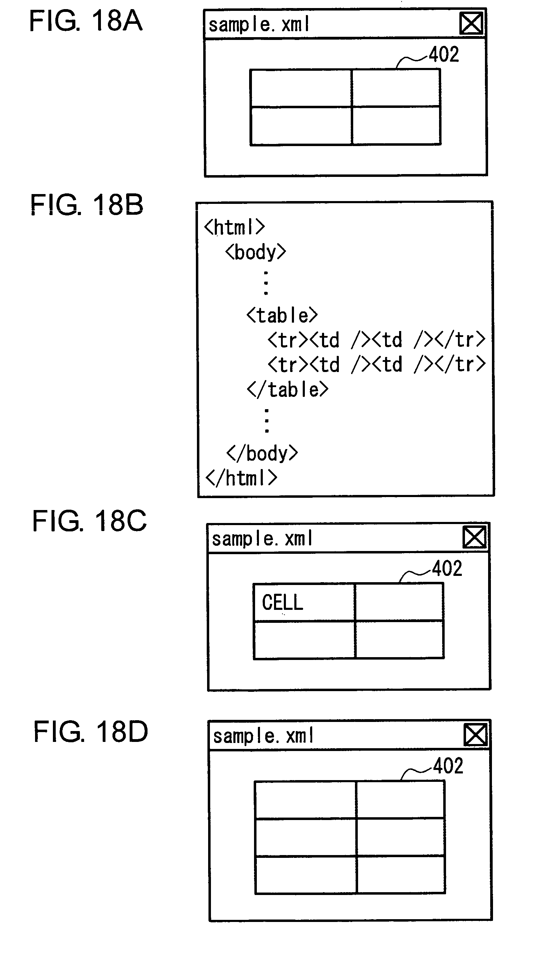

FIG. 18(a) through FIG. 18(d) show examples of data inserted into a document by the data insertion device 300 shown in FIG. 17. FIG. 18(a) shows an example of what is displayed on the screen. In this example, FIG. 18(a) shows cells 402 arranged in the form of a 2 × 2 matrix. FIG. 18(b) shows the source code corresponding to the screen shown in FIG. 18(a). In the example shown in FIG. 18(a), there is no data in each of the four cells 402. Accordingly, four <td /> tags are described in the source code. Let us consider a case in which the user inputs the word "cell" in one of the cells, which is located at the upper-left portion, in this situation as shown in FIG. 18(c), The position determination unit 320 identifies that the cell 402 located at the upper-left portion corresponds to one of the <td/ > tags shown in FIG. 18(b).

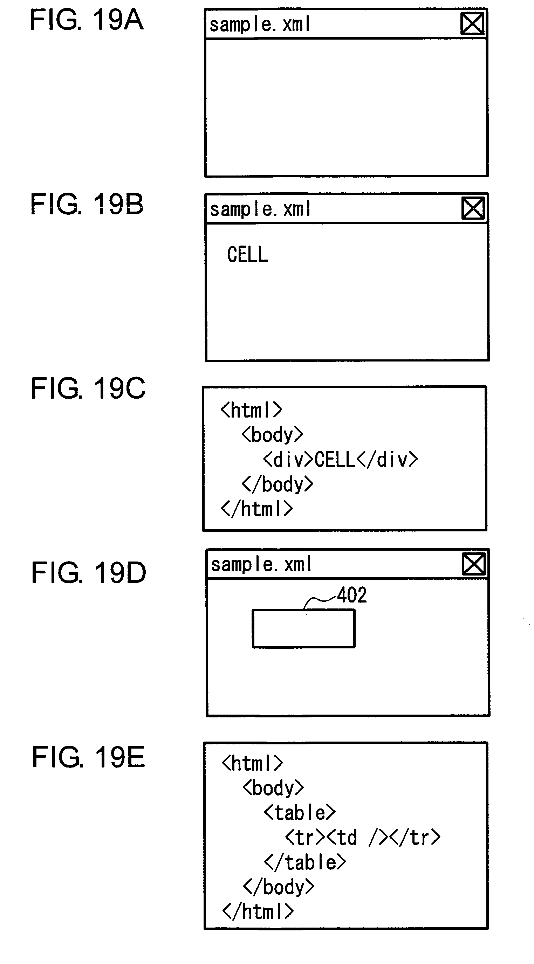

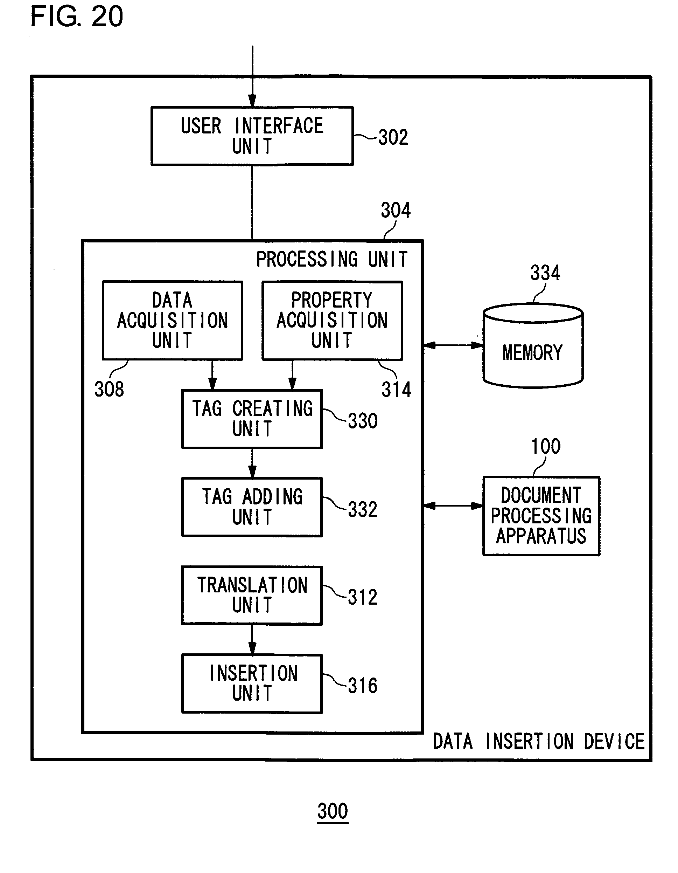

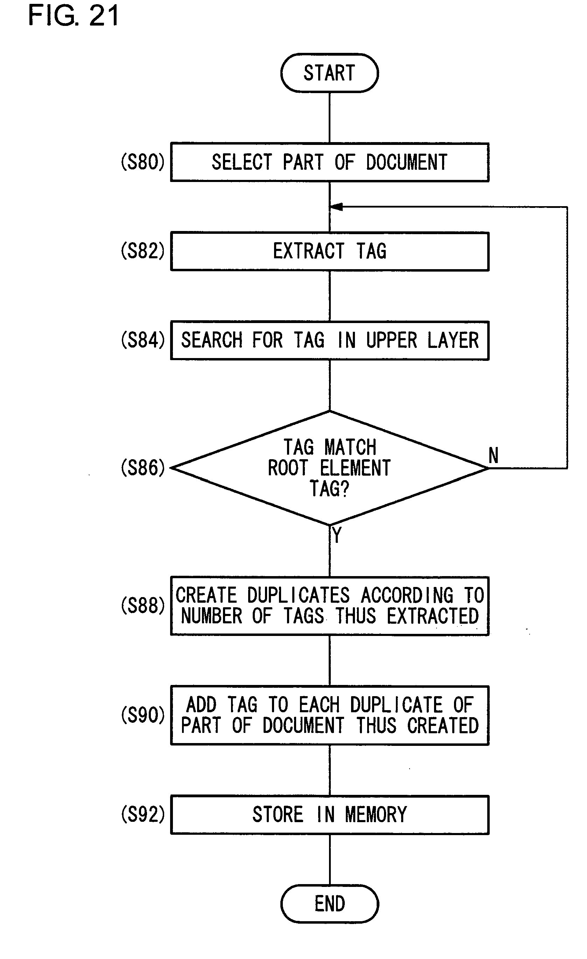

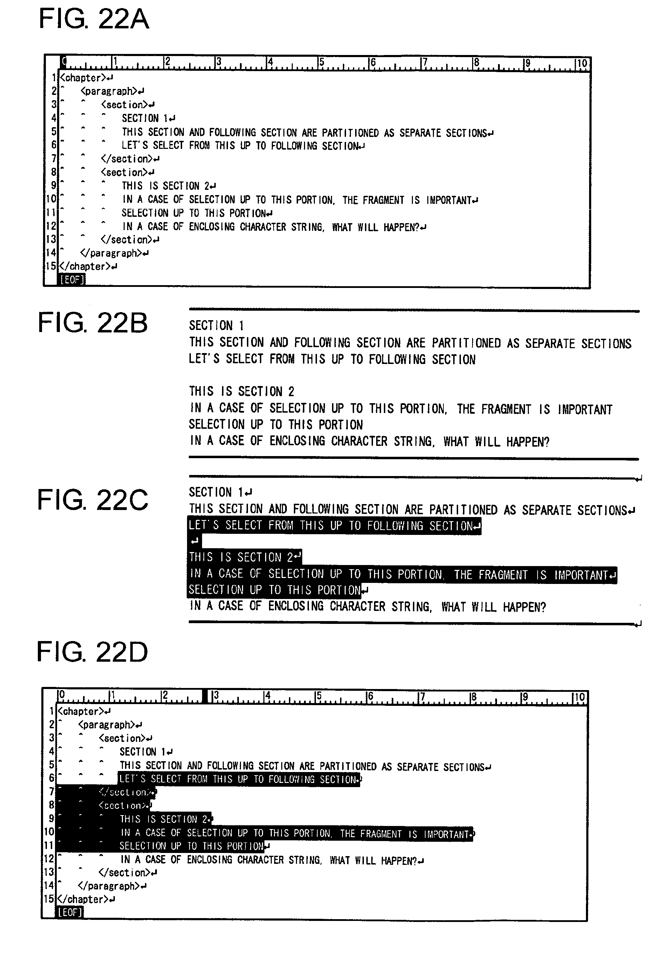

The vocabulary acquisition unit 322 acquires four kinds of translation candidates for the word "cell". The four kinds of translation candidates thus acquired include: a fragment including added <td> tags; a fragment including added <tr> tags and added <td> tags; a fragment including added <table> tags, added <tr> tags, and added <td> tags; and a fragment including added <body> tags, added <table> tags, added <tr> tags, and added <td> tags. The translation unit 312 determines that, according to the tag structure, the latter two candidates should be eliminated from the aforementioned four kinds of translation candidates, before the execution of translation. The reason is that XHTML does not permit data enclosed in a <table> tag set to be further enclosed in another <table> tag set. Accordingly, such an arrangement allows the user to select either one of the former two translation candidates, which are possible candidates from among the aforementioned four kinds of translation candidates. FIG. 18(c) shows an example in a case that the user has selected the option with the <td> tags. In this case, in the source code shown in FIG. 18(b), <tr><td /><td /></tr> is replaced by <tr><td>cell<td /></tr>. On the other hand, FIG. 18(d) shows an example in a case that the user has selected the option with the <tr> tags and the <td> tags. In this case, the <tr><td /><td /></tr> tag set is added to the source code shown in FIG. 18(b).

FIG. 19(a) through FIG. 19(d) show another example of data inserted into a document by the data insertion device 300 shown in FIG. 17. In this example, let us say tat the cell 402 is not displayed on the screen in the initial state, unlike the example shown in FIG. 18(a) through FIG. 18(d). FIG. 19(a) shows the initial state. FIG. 19(b) shows the state in a case that the user has input "cell" in the katakana syllabary, and the input data has been displayed in the form of text as it is. FIG. 19(c) shows the source code that corresponds to the screen shown in FIG. 19(b). On the other hand, FIG. 19(d) illustrates what is displayed on the screen in a case that the user has input "cell" in the katakana syllabary in the same way as in FIG. 19(b), but the translation unit 312 has identified that the input data corresponds to the input of the cell 402. In this case, the source code is created as shown in FIG. 19(e). Such an arrangement allows data to be inserted into multiple kinds of layers having a hierarchical structure while maintaining the integrity of the hierarchical structure of the processing target document.

With the embodiment according to the present invention, the data is inserted into the processing target document after the data has been translated giving consideration to the processing target vocabulary or the processing target schema. Such an arrangement allows the user to insert data correctly without being concerned about the processing target vocabulary or the processing target schema. With such an arrangement, the data is inserted into the processing target document after the tags added to the data have been modified corresponding to the processing target vocabulary. This allows the user to perform data insertion correctly without being concerned about the processing target vocabulary. Also, with such an arrangement, the data is inserted into the processing target document after the tags added to the data have been modified corresponding to the processing target schema. This allows the user to perform data insertion correctly without being concerned about the processing target schema. Such an arrangement allows the user to perform data insertion without being concerned about the processing target vocabulary and the processing target schema, thereby improving the ease-of-use for the user. Such an arrangement provides a function of identifying the processing target vocabulary based upon the relation between the kind of markup language used for displaying the processing target document and the processing target vocabulary. With such an arrangement, the processing target schema is identified based upon the processing target vocabulary and the tags added to the data. This enables the data to be correctly inserted into the processing target document without receiving the processing target schema. Also, such an arrangement provides a function of data insertion while maintaining the integrity of the hierarchical structure of the processing target document.

### (Embodiment 2)

The embodiment 2 of the present invention relates to a data insertion device providing: a function of displaying the processing target document as an XHTML document on a screen or the like after the processing target document has been translated into an XHTML document; a function of permitting the user to select a part of the XHTML document and receiving the part thus selected; and a function of inserting the part thus received into another portion of the XHTML document. The data insertion device according to the present invention provides a function of cut processing, as well as providing a function of copy processing. The character string or the like selected in the copy processing is stored in a clipboard. The data insertion device extracts the tags disposed in the layer in which the character string thus selected has been disposed, and the tags for the upper layers above these tags. The data insertion device creates a combination of multiple kinds of character strings by modifying the combination.

FIG. 20 shows a configuration of the data insertion device 300 according to the embodiment 2. The data insertion device 300 comprises the processing unit 304, memory 334, and the document processing apparatus 100. Furthermore, the processing unit 304 comprises the data acquisition unit 308, the property acquisition unit 314, a tag creating unit 330, a tag adding unit 332, the translation unit 312, and the insertion unit 316. Here, the data insertion device 300 is an example of a document processing apparatus which is encompassed by the technical scope of the claims appended to the present specification, in the same way as the device shown in FIG. 11. On the other hand, the document processing apparatus 100 corresponds to the document processing apparatus 100 described above in the background technique.

The data acquisition unit 308 receives an instruction to select a part of the processing target document from the user via the user interface unit 302. Here, the processing target document has a hierarchical structure in the same way as with the embodiment 1. On the other hand, the "selection" is performed before the copy processing or the cut processing for a part of the processing target document. The property acquisition unit 314 receives the tag structure included in the document as a property of the processing target document.

The tag creating unit 330 creates at least one tag to be added to a part of the processing target document thus selected by the data acquisition unit 308, based upon the tag structure received by the property acquisition unit 314. That is to say, the tag creating unit 330 creates at least one tag which is defined in the markup language and which is to be added to a part of the processing target document thus selected by the data acquisition unit 308 while maintaining the integrity of the hierarchical structure of the processing target document. Specifically, the tag creating unit 330 extracts the tags disposed in the layer in which the selected part of the document has been disposed, and the tags disposed in the upper layers above these tags. The term "tags in the upper layers" represents tags which have been disposed in upper layers above the layer in which a selected part of a document has been disposed, and which are below the root element. Note that detailed description will be made later with reference to specific examples. Furthermore, various combinations are created using the tags thus extracted in descending order of layers. Accordingly, multiple kinds of tag combinations are created by changing the number of tags that form a combination.

The tag adding unit 332 reproduces duplicates of the part of the processing target document thus selected corresponding to the number of tag combinations created by the tag creating unit 330. Furthermore, the tag adding unit 332 adds each of the multiple kinds of tag combinations to the respective duplicate of the selected part of the document thus created. That is to say, duplicates of the selected part of the document are created, each of which has the same contents. Then, the multiple kinds of tag combinations are added to the duplicates thus created in such a manner that the combination of tags differs from one duplicate to another, thereby creating multiple versions of "part of the document". This means that multiple fragments are created. The memory 334 stores the multiple versions of the selected part of the document output from the tag adding unit 332.

Upon reception of an instruction from the user via the user interface unit 302 to paste the selected part of the document stored in the memory 334, the translation unit 312 reads out the multiple versions of the selected part of the document stored in the memory 334. Furthermore, the translation unit 312 selects one from among the multiple versions of the selected part of the document according to an instruction from the user. The insertion unit 316 inserts the one part of the document thus selected such that the tags added to the one part of the document thus selected maintain the integrity of the tag structure of the processing target document. Note that the processing unit 304 executes the aforementioned processing using predetermined functions provided by the document processing apparatus 100 in the same way as that shown in FIG. 11.

FIG. 21 is a flowchart which shows a procedure for acquiring data executed by the data insertion device 300. The data acquisition unit 308 selects a part of the processing target document according to an instruction via the user interface 302 (S80). The property acquisition unit 314 acquires the tag structure included in the processing target document. The tag creating unit 330 extracts the tags disposed in the layer in which the part of the document thus selected by the data acquisition unit 308 has been disposed from the selected part of the document according to the hierarchical structure (S82). The tag creating unit 330 further searches for a tag disposed in an upper layer (S84). In a case that the tag thus detected does not match the root element tag (in a case of "NO" in S86), the data insertion device 300 repeatedly executes the processing from Step S82, thereby extracting multiple kinds of tags. On the other hand, in a case that the tag thus detected matches the root element tag (in a case of "YES" in S86), the tag adding unit 332 creates duplicates of the part of the document thus selected by the data acquisition unit 308 according to the number of tags thus extracted by the tag creating unit 330 (S88). Furthermore, the tag adding unit 332 adds the tags to the respective duplicates of the selected part of the document thus created in such a manner that the combination of tags differs from one duplicate to another (S90). The memory 334 stores the multiple versions of the selected part of the document including the added tags (S92).

FIG. 22(a) through FIG. 22(d) show examples of data inserted by the data insertion device 300. FIG. 22(a) shows the source code of the processing target document. In this case, the processing target document has a hierarchical structure including, in the order of higher hierarchical elements, a <chapter> tag that serves as the root element, a <paragraph> tag, and a <section> tag. FIG. 22(b) shows a screen on which the processing target document is displayed. FIG. 22(c) shows a screen in a case that the user has selected a part of the document displayed on the screen shown in FIG. 22(b) for the purpose of copy processing or cut processing. In this example, the reversed portion corresponds to the portion selected by the user. FIG. 22(d) shows the source code of the processing target document that corresponds to the screen display shown in FIG. 22(c). The reversed portion corresponds to the portion selected by the user in the same way as in FIG. 22(c).

The portion thus selected corresponds to the <section> layer in the hierarchical structure of the processing target document. Accordingly, the tag creating unit 330 also extracts the <paragraph> tag which corresponds to an upper layer and which is not the root element tag. Then, various combinations of tags are created, each of which is to be inserted so as to enclose a selected part of the document. The tag combinations thus created in the final stage are: a <section> ... </section> combination; and a <paragraph><section> ... </section></paragraph> combination. Then, the tag adding unit 332 creates two duplicates of the selected part. Furthermore, the tag adding unit 332 adds each of the two kinds of tag combinations to the respective duplicate of the selected part.

With the embodiment of the present invention, tags are created for a selected part of a processing target document, and the tags thus created are added to the selected part. Such an arrangement allows a selected part of a processing target document to be inserted in the form of data described in a markup language without the need for the user to describe new tags. This does not require the user to describe tags, thereby improving the ease-of-use for the user. Furthermore, such an arrangement creates tags giving consideration to the tag structure of the processing target document, thereby maintaining the integrity of the hierarchical structure of the processing target document. Also, with such an arrangement, a limited number of kinds of tags are created. Accordingly, an arrangement may be made in which the operation for selecting one from the multiple kinds of tags is eliminated. Also, with such an arrangement, the part thus selected can be inserted into various portions in the processing target document.

Description has been made regarding the present invention with reference to the embodiments. The above-described embodiments have been described for exemplary purposes only, and are by no means intended to be interpreted restrictively. Rather, it can be readily conceived by those skilled in this art that various modifications may be made by making various combinations of the aforementioned components or processes, which are also encompassed in the technical scope of the present invention.

Description has been made in the background technique regarding an arrangement for processing an XML document. Also, the document processing apparatus 100 has a function of processing other markup languages, e.g., SGML, HTML, etc.

Description has been made in the embodiment 1 regarding an arrangement in which, in a case that the data to be copied and pasted is a character string, and in a case that the character string does not conform to the processing target vocabulary at the insertion position, the translation unit 312 determines that the insertion of this character string is not to be performed. The present invention is not restricted to such an arrangement. Also, an arrangement may be made in which, in a case that the data to be copied and pasted is a predetermined kind of graphic data, the translation unit 312 converts the graphic data into SVG data, i.e., adds a tag set supported by SVG to the graphic data, and inserts the SVG data into the processing target document. Also, an arrangement may be made in which, in a case that no vocabulary has been defined to support the data to be inserted, the translation unit 312 defines the vocabulary by declaring the definition of the vocabulary that supports the data to be inserted in the namespace. The modification according to the present embodiment also provides a function of inserting graphic data or the like into the processing target document. That is to say, an arrangement may be made which provides a function of the insertion of any data while maintaining the integrity of the hierarchical structure of the processing target document.

Description has been made in the embodiment 2 regarding an arrangement in which the property acquisition unit 314 acquires the tag structure of the processing target document as a property of the processing target document. The present invention is not restricted to such an arrangement. Also, the processing target vocabulary or the processing target schema may be acquired as the property of the processing target document, for example. The modifications according to the present embodiment may have a function of handling various rules defined for the processing target document. That is to say, any rule defined for the processing target document may be used as a property of the processing target document.

### Industrial Applicability

The present invention can be applied to a document processing apparatus for processing a document described in a markup language.

## Claims

1. A document processing apparatus comprising:
a selection unit for selecting a part of a document described in a markup language;
a reception unit for receiving the properties of the markup language used for describing the document;
a creating unit for creating at least one tag in the markup language, which is to be added to the part of the document thus selected by said selection unit, based upon the properties received by said reception unit; and
an output unit for creating several duplicates of the selected part of the document according to the number of tags thus created by said creating unit, adding at least one tag thus created to each duplicate of the selected part of the document thus reproduced, and outputting each version of the selected part of the document with added tags to memory.

2. A document processing apparatus according to Claim 1, wherein the property of the markup language used for describing the document thus received by said reception unit is a tag structure,
and wherein said creating unit creates at least one tag in the markup language, which is to be added to the part of the document thus selected by said selection unit, such that adding the tag maintains the integrity of the tag structure included in the document.

3. A document processing apparatus according to Claim 2, wherein the document which is to be a target for the selection made by said selection unit has a hierarchical structure,
and wherein said creating unit extracts tags in the layer in which the selected part of the document has been disposed, and tags in upper layers above the said tags, from the hierarchical structure of the document,
and wherein said creating unit employs the tags thus extracted as the tags to be added to the part of the document thus selected by said selection unit.

4. A document processing apparatus according to any one of Claims 1 through 3, further comprising an insertion unit having a function of selecting one from among at least one version of the selected part of the document which has been output from said output unit, and which includes a added tag set, and a function of inserting the selected one version of the selected part of the document into a document described in a markup language.

5. A document processing method comprising:
selection of a part of a document described in a markup language;
creation of at least one tag in the markup language, which is to be added to the part of the document thus selected, based upon the properties of the markup language used for describing the document;
creation of several duplicates of the selected part of the document according to the number of tags thus created;
addition of at least one tag thus created to each duplicate of the selected part of the document thus created; and
output of the several versions of the selected part of the document with the added tags to memory.

6. A program which instructs a computer to execute processing, said processing comprising:
a step for selecting a part of a document described in a markup language, and storing the selected part of the document in memory;
a step for receiving the properties of the markup language used for describing the document;
a step for creating at least one tag in the markup language, which is to be added to the part of the document thus stored in the memory, based upon the properties received in said reception step;
a step in which several duplicates of the selected part of the document are created according to the number of tags thus created in said tag creating step, at least one tag thus created is added to each duplicate of the selected part of the document, and each version of the selected part of the document with added tags is output to the memory.
